# EUROPEAN PATENT SPECIFICATION

(11) **EP 2 934 158 B1**
(45) Date of publication and mention of the grant of the patent: **20.07.2022**
(21) Application number: 13814820.0
(22) Date of filing: 13.12.2013
(51) Int. Cl.: A23C 3/07, A23C 9/20

(54) **METHODS FOR PASTEURIZATION OF HUMAN MILK**
VERFAHREN ZUR PASTEURISIERUNG VON MUTTERMILCH
PROCÉDÉS DE PASTEURISATION DE LAIT DE FEMME

(30) Priority: 18.12.2012 AU 2012905577; 24.04.2013 AU 2013901438
(43) Date of publication of application: 28.10.2015
(73) Proprietor: CARAG AG, 6340 Baar (CH)
(72) Inventor: CHRISTEN, Lukas, CH-6280 Hochdorf (CH)
(74) Representative: Pestalozzi, Deborah
(86) International application number: PCT/CH2013/000224
(87) International publication number: WO 2014/094189

(56) References cited:
- EP-A1- 1 496 114
- EP-B1- 1 337 280
- WO-A1-2010/110853
- FR-A- 667 660
- GB-A- 324 503
- US-A- 2 457 761
- LUKAS CHRISTEN ET AL: "Ultraviolet-C Irradiation: A Novel Pasteurization Method for Donor Human Milk", PLOS ONE, vol. 8, no. 6, 26 June 2013 (2013-06-26), page e68120, XP055100799, DOI: 10.1371/journal.pone.0068120

## Description

### FIELD OF THE INVENTION

The present invention relates to a method for the inactivation of a biological contaminant in a human milk product.

### BACKGROUND OF THE INVENTION

Pasteurization refers to a process of killing or inactivating microorganisms present in a food, typically liquids, to prevent spoilage of the food by the growth of the microorganisms in the food. Pasteurization occurs by heating the food to a specific temperature for a specific period of time so as to reduce the number of viable microorganisms in the food. This process is referred to as thermal pasteurization.

Thermal pasteurization of bovine milk has been used for over one hundred years. Two common methods of thermal pasteurization involve exposure of milk to a high temperature for a short period of time, followed by immediate cooling. The first method of thermal pasteurization is referred to as High Temperature Short Time (HTST) where milk is exposed to a temperature of approximately 72°C for 15-20 seconds. The second thermal pasteurization method is referred to as low temperature long time (LTLT) or "Holder-" pasteurization, where milk is heated to 62.5°C and kept for 30 minutes. These are the only universally approved techniques.

Presently, thermal pasteurization is the only pasteurization method used for human milk and is currently employed for milk banking where milk is donated, screened and supplied to an infant when milk from the infant's mother is not available. Human milk is very seldom sterile. Presently, approximately 15% of milk collected at various milk banks has to be thrown away because it contains pathogenic bacteria such as S. *aureus, Enterobacteriaceae* and *Enterococci.* Approximately 6% has to be thrown away because the total count of bacteria is over 100,000 colony forming units (CFU/ml). Furthermore, Human immunodeficiency virus (HIV), cytomegalovirus (CMV), Human T-lymphotropic virus (HTLV) and other viruses may be transmitted by human milk and cause infections and disease. Furthermore, transmission of disease can also be mediated through heat resistant spores that survive thermal pasteurization.

Human milk can be pasteurized by HTST or LTLT methods. Holder Pasteurization is capable of causing a 5-log₁₀ reduction of a variety of bacterial species including *Escherichia coli, Staphylococcus epidermidis, Enterobacter cloacae, Bacillus cereus* and *Staphylococcus aureus* in human milk (Czank C, et al, Pediatric Research 2009; 66:374-379). Therefore, thermal pasteurization minimizes the risk of transmission of diseases via human milk.

However, important, heat labile bioactive components present in human milk can be altered or lost from the milk when it is subjected to thermal pasteurization. Accordingly, there exists a need to provide an improved method of pasteurization of human milk that sufficiently inactivates biological contaminants without altering or inactivating important bioactive components.

Ultraviolet (UV) light treatment has been employed for the pasteurization and decontamination of drinking water, beer, wine and fruit juices, cut and whole fruit and also for air purification and packaging of fresh food. Exposure of substances to UV, or UV treatment, is classified as a non-thermal disinfection method. This has been referred to by some in the art as "UV-" or "Cold Pasteurization".

Ultraviolet light is defined as electromagnetic radiation having wavelengths shorter than visible light but longer than X-rays. Effective UV treatment of a liquid to be pasteurized requires a sufficient dosage, i.e. sufficient exposure of the biological contaminants to the UV. The degree to which UV penetrates the liquid depends on the solubility, density and turbidity of the liquid.

Previous studies have demonstrated that UV treatment could be used to reduce the microbial load of opaque liquids. However, milk is difficult to treat with UV due to its high absorption coefficient of 300cm⁻¹ at a wavelength of 254nm compared to the absorption coefficient of drinking water and beer with 0.1 and 20cm⁻¹, respectively.

Indeed, various flow-through reactors have been developed to ensure sufficient UV exposure is achieved where large volumes of liquid are to be treated and where the liquids to be treated are turbid and light penetration is limited. Such flow-through reactors are designed to spread the liquid into a thin layer or film, or alternatively, a turbulent flow is imparted to the liquid which is caused to flow around the UV source thereby exposing the biological contaminants to photons at the interface between the opaque liquid and the photon source. Such apparatuses are described in US Patents 5,675,153; 5,567,616; 6,540,967 and 6,576,201 and WO 01/37675. EP 1 496 114 describes the irradiation of a fluid medium with UVB-light. In GB 324,503, liquid is irradiated with UV light while it vertically streams through a glass tube. EP 1 337 280 discloses the use of UV radiation for biological fluids, such as plasma and blood, or food products.

However, there exist a number of disadvantages associated with current methods and devices for pasteurization of bovine milk or fruit juice that make their application to pasteurization of human milk unworkable.

Firstly, present methods are directed towards the treatment of large volumes of milk which are required to be pumped from a source to a UV reactor and subsequently recirculated or passed through a plurality of reactors. Human milk can only be collected in small volumes and such small volumes would be lost in those large reactors.

Secondly, other problems associated with the requirement to pump milk through a reactor include: stasis of the milk within certain sections of the apparatus which permits collection and growth of biological contaminants; deposition of milk solids upon the surfaces of the reactor which can lead to impedance of UV penetration and difficulty in cleaning the apparatus; and undesirable properties being imparted to the milk such as the formation of butter from coalescence of milk fat globules resulting from turbulent flow applied to the milk.

These devices can be difficult to maintain. It would be desirable to have a method of pasteurizing small volumes of a human milk product and an apparatus for the same that can be conveniently used by breast feeding mothers, in milk banks, in hospitals and in other clinical settings. Such methods and devices would provide peace of mind that expressed milk can be conveniently pasteurized.

Another problem faced by present methods of pasteurizing human milk is a reduction and/or loss of activity of various important bioactive components present in human milk. Current methods for pasteurization of human milk, such as Holder pasteurization, are aimed at reducing the bacterial load of human milk without consideration of maintaining an effective level of important bioactive components in the milk. Pasteurization of human milk is based on the technology developed by the dairy industry. The aim of the dairy industry is to reduce the enzymatic activity in bovine milk to increase self-life. In human milk the enzymatic activity is needed to transfer the whole benefit of human milk to the infant.

Human milk has been shown to inhibit the growth of *Escherichia coli, Staphylococcus aureus* and *Candida* sp. This bacteriostatic property of human milk is thought to be predominantly due to immunological proteins including lactoferrin, lysozyme and slgA. Lactoferrin is an iron-binding protein that reduces the availability of free iron required by iron-dependent pathogens such as *E. coli* and therefore inhibits their growth, as well as disrupting the bacterial cell membrane by binding to the lipid-A portion of lipopolysaccharides on the bacterial cell surface. Lysozyme lyses the cell walls of most gram-positive bacteria such as S. *aureus* by catalyzing the hydrolysis of specific bonds between N-acetylglucosamine and N-acetylmuramic acid. While lysozyme alone is bacteriostatic, an *in vitro* study showed that in presence of lactoferrin it is also bactericidal and can kill some gram-negative bacteria. Secretory IgA (slgA) is an antibody, which is secreted specifically in response to the pathogens the mother and infant are exposed to and therefore, is boosting the infant's immune defence system. slgA is more able to persist in the intestinal tract than other immunoglobulins due to its resistance to proteolytic enzymes. Although slgA has no known antimicrobial activity in human milk it enhances the antimicrobial activity of lactoferrin and lysozyme and it plays a major role in the infant's immune defence when digested. The activity and retention of such bioactive components can be adversely impacted using thermal pasteurization.

Therefore, there exists a need to provide an improved method of pasteurization of human milk products whilst maintaining bioactive components which overcomes the problems faced by methods presently employed.

The discussion of documents, acts, materials, devices, articles and the like is included in this specification solely for the purpose of providing a context for the present invention. It is not suggested or represented that any or all of these matters formed part of the prior art base or were common general knowledge in the field relevant to the present invention as it existed before the priority date of each claim of this application.

Where the terms "comprise", "comprises", "comprised" or "comprising" are used in this specification (including the claims) they are to be interpreted as specifying the presence of the stated features, integers, steps or components, but not precluding the presence of one or more other features, integers, steps or components, or group thereof.

### SUMMARY OF THE INVENTION

The pasteurization of human milk is required for the reduction of risk in disease transmission from the milk to the recipient. Furthermore, the ability to sufficiently inactivate biological contaminants in human milk, whilst preserving or retaining activity of important bioactive components present in human milk, is needed.

Accordingly the present invention concerns a method of inactivating or reducing an amount of a biological contaminant present in a human milk product comprising exposing the human milk product to ultraviolet light (UV) having a wavelength from 250 nm to 270 nm, and imparting a vortical flow to the human milk product to facilitate exposure of the biological contaminant in the milk product to the UV light; wherein exposure of the biological contaminant to the UV light inactivates or reduces the amount of the biological contaminant in the milk product and wherein the activity of a bioactive component present in the milk product is not substantially reduced.

According to an unclaimed aspect of the invention, there is provided an apparatus for inactivating or reducing an amount of a biological contaminant in a human milk product, comprising a container for containing a volume of a human milk product, wherein a UV light source is associated with the container such that the human milk product is exposed to UV light; and a means to apply a vortical flow to said milk product retained inside said container so as to facilitate exposure of the contaminant to the UV light source.

According to a further aspect of the invention, there is a provided human milk product prepared by the method comprising exposing the milk product to ultraviolet light (UV) and imparting a vortical flow to the milk product to facilitate exposure of the contaminant in the milk product to the UV light; wherein exposure of the contaminant to the UV light inactivates or reduces the amount of the contaminant in the milk product and wherein the activity of a bioactive component present in the milk product is not substantially reduced.

### BRIEF DESCRIPTION OF THE FIGURES

For a further understanding of the aspects and advantages of the present invention, reference should be made to the following detailed description, taken in conjunction with the accompanying drawings.
FIGURE 1 shows an embodiment of an apparatus not according to an aspect of the invention.
FIGURE 2 shows the decimal reduction dosage in correlation to total solids in human milk samples.
FIGURE 3 shows alkaline phosphatase retention in human milk samples after prolonged UV-irradiation.
FIGURE 4 shows the concentrations of a fatty acid profile in untreated human milk samples (white) and samples treated with UV-C at a dosage of 4863 J/I (grey).
FIGURE 5 shows inactivation of CMV present in milk and media which is exposed to UV. Results are presented as TCID₅₀/ml.
FIGURE 6 shows bacterial growth for untreated, UV-C irradiated and Holder pasteurized human milk and nutrient broth (NB).
FIGURE 7 shows the relationship between total solids concentration and lysozyme retention in UV-C irradiated human milk.
FIGURE 8 shows immunological protein concentration of untreated, UV-C irradiated and Holder pasteurized human milk.
FIGURE 9 shows the relationship between bacterial multiplication rate per hour and concentration of slgA, lactoferrin and lysozyme.
FIGURE 10 shows the relationship between the concentrations of immunological proteins in human milk.
FIGURE 11 shows a schematic of a structural arrangement for an apparatus not according to an embodiment of the invention.
FIGURE 12 shows a schematic of a structural arrangement for an apparatus not according to an alternate embodiment of the invention.
FIGURE 13 shows the UV-C set up (layer treatment)
FIGURE 14 shows fluorescence reading of human milk pre- and post UV-C irradiation.
FIGURE 15 shows fluorescence reading of untreated, UV-C irradiated and Holder pasteurized human milk with additionally adding nothing, catalase or H₂O₂.

### DETAILED DESCRIPTION OF THE INVENTION

Human milk contains nutritional and bioactive components that cannot be provided to an infant by formula. Therefore, donor human milk is regarded as the best alternative if mothers' own milk is not available, especially for a preterm infant (Wight, NE. Donor human milk for preterm infants. J Perinatol 2001; 21:249-254). Donor milk has also been demonstrated to benefit term infants and immune incompetent adults. To minimize the risk of transmission of diseases from a donor mother to a preterm infant, the donor human milk is pasteurized. Current methods of thermal pasteurization of human milk result in the reduction and/or loss of activity of various important bioactive components present in human milk. Such reduction and or/loss can result in a milk of inferior quality. Studies have demonstrated a reduction in fat absorption and growth rate in infants fed thermally pasteurized human milk compared to infants fed raw human milk.

The capacity to pasteurize human milk without compromising the activities of key bioactive substances and overall composition of the milk would be of great significance in areas such as neonatal care of infants and milk banking.

As used herein, the term "human milk product" refers to human milk or a product derived from or containing human milk. It can refer to whole milk, milk to which a substance has been added or a fraction of human milk derived from a processing or separation technique including separation, extraction concentration, centrifugation or filtration including ultra filtration or nano filtration. Such milk products may include fresh milk or milk that has been stored at room temperature, refrigerated or frozen (for example at or below 0°C, -20°C or - 80°C); colostrum, fortified breast milk; a low fat milk product, a sugar/lactose free milk product, casein, cream, whey or milk solids.

Without being limited by the description, the following description will exemplify the use of human milk. However, the human milk products, as described above, are equally applicable to the methods of the present invention.

According to the method of the present invention, inactivation of a biological contaminant in human milk enables the retention of the biological activity of key bioactives present in human milk and also enables the overall composition of the milk to be maintained. In this way, the method enables the provision of a human milk product of a quality superior to that achieved using Holder pasteurization.

As used herein, the term "biological contaminant" refers to but is not limited to micro-organisms such as viruses, bacteria, protozoa, yeasts, spores, moulds and algae. Such biological contaminants can include viruses (including viral nucleic acids) selected from but not limited to B-type (retrovirus-like particles), Coxsackievirus B3, Cytomegalovirus (CMV), Ebola virus, Echovirus 18, Epstein-Barr virus (EBV), Hepatitis B virus, Hepatitis C virus, Hepatitis E virus, Herpes simplex virus type 1, Human herpesvirus 6, Human herpesvirus 7, Human immunodeficiency virus (HIV) type 1 (and 2), Human T-lymphotropic virus (HTLV), Human papillomavirus 16, Rotavirus, Rubella virus, Sin nombre (no name) hantavirus RNA, Transfusion-transmission virus (TTV), Varicella-zoster virus, West Nile virus; Bacteria and fungi including but not limited to *Staphylococcus* spp., *Streptoccoccus* spp., *Bascillus* spp., *Campylobacter* spp., *Enterococcus* spp. and *Enterobacter* spp., *E. coli, Bacillus cereus, Borrelia burgdorferi, Brucella melitensis, Burkholderia pseudomallei, Candida albicans, Citrobacter freundii, Coxiella burnetti, Enterbacter aerogenes, E. cloaca, Klebsiella pneumonia, Lactobacillus gasseri, Enterococcus faecium, Leptospira australis, Listeria monocytogenes, Mycobacterium paratuberculosis, Mycobacterium tuberculosis, Pseudomonas Aeruginosa, Salmonella Kottbus, Salmonella panama, Salmonella senftenberg, Salmonella typhimurium, Serratia marcescens, Staphylococcus aureus, Staphylococcus epidermis and Streptococcus agalactiae;* Parasites including but not limited to *Necator americanus, Onchocerca volvulus, Schistosoma mansoni, Strongyloides fulleborni, Toxoplasma gondii, Trichinella spiralis,* and *Trypanosoma cruzi.*

The detection of a biological contaminant in human milk may be achieved using standard methods known to those in the art. These include but are not limited to culture based assays and nucleic acid-based methods of detection. For example, the presence of a bacterial contaminant may be achieved through the culture of a sample of a human milk product with an appropriate medium, such as Blood agar, MacConckey's agar, etc. for an appropriate time such as 48h, at 37°C. The bacterial contaminant may be further identified with a Gram stain. Alternatively, nucleic acid-based methods of detection such as PCR detection methods may be applied. Likewise, culture-, or nucleic acid-based methods may be employed for the detection of viral or parasitic contaminants. The positive detection of a contaminant in a sample of milk will depend on the method employed for detection. Contamination of a sample refers to detection of the presence of a contaminant in the sample.

Bacterial contamination of human milk can occur through the use of non-sterile breast pump-sets and containers. In some situations, such as in milk banks, the upper limit of total bacterial contamination, as detected by bacteriological culture, before pasteurization is 100,000 CFU/ml. Additionally, in Australia, the pre-pasteurization sample has to be free of pathogenic bacteria that produce heat stable enterotoxins (e.g. S. *aureus, Enterobacteriaceae* and *Enterococci* etc.). The most common bacteria found to contaminate human milk include *E. coli,* S. *aureus, S. epidermidis, B. cereus,* and *E.* cloacae. The most common viruses found to contaminate human milk include CMV, HIV, HTLV.

In a preferred embodiment, the present invention provides a method that inactivates or reduces the amount of a biological contaminant present in human milk, wherein the contaminant is selected from *E. coli, Staphylococcus* spp., *Streptococcus* spp., *Bacillus* spp., *Enterococcus* spp. and *Enterobacter* spp.

In a further preferred embodiment, the present invention provides a method that inactivates or reduces the amount of a biological contaminant present in human milk, wherein the contaminant is selected from CMV, HIV and HTLV.

Without being bound by any theory, exposure of a biological contaminant to a sufficient dose of UV light introduces damage, including breaks and dimers, to strands of nucleic acids. Such damage can impair or inhibit the capacity of a contaminant to replicate their genetic material and lead to death or destruction of the contaminant.

As used herein, the term "inactivate" (and forms thereof) means the actual destruction, eradication of a contaminant, or a direct or indirect effect on the contaminant that substantially inhibits its ability to replicate or otherwise to adversely affect a living recipient.

According to another embodiment, the method of the invention reduces the amount of a biological contaminant present in the milk. As used herein the term "reduce" (and variants thereof) when applied to a biological contaminant refers to a lowering in the amount of biological contaminant or a reduction in the number of contaminants that are active and/or capable of replicating and/or infecting an individual.

Inactivation of a biological contaminant or a reduction in the amount of a biological contaminant, in human milk may be measured using methods of detection known to those in the art. The inactivation of a biological contaminant may also be determined using assays of the bioactivity of a biological contaminant. The inactivation or reduction may be ascertained by comparison of data generated from analysis of a sample before and after exposure to UV. The determination of the ability of a virus to infect a cell before and after exposure to UV is an example of an assay of the bioactivity of a contaminant. In such an assay, a reduction in the ability of a virus to infect a cell following exposure to UV would represent inactivation. Such inactivation of a biological contaminant may occur despite a lack of reduction of the total amount of contaminant detected in the sample. For example, the amount of viral DNA or RNA in a sample may remain unchanged following UV exposure despite a reduction in the number of cells infected with the virus.

As used herein, the term decimal reduction dose refers to the dose of UV required for the surviving population of a contaminant to be reduced by 1 log cycle, that is, the dose required to destroy or inactivate 90% of population of a contaminant. In a preferred embodiment, the method of the invention reduces the level of a contaminant by at least a Log₁₀-unit. In a further preferred embodiment, the method of the invention reduces the contaminant by at least 2, 3, 4 or 5 Log₁₀-units. In still a further preferred embodiment, the method of the invention reduces the contaminant by at least 5 Log₁₀-units.

Preferably, the method of the invention inactivates or reduces the level of a contaminant in a human milk product such that the milk product may be safely used. Preferably, the level of a contaminant is inactivated or reduced to a level of 20000 CFU/ml. More preferably, the contaminant is reduced to a level less than a level selected from the group including 10000, 9000, 8000, 7000, 6000, 5000, 4000, 3000, 2000, 1000, 900, 800, 700, 600, 500, 400, 300, 200, 100, 90, 80, 70, 60, 50 40, 30, 20, 10, and 5 CFU/ml.

The form of UV light used for inactivating biological contaminants is UV-C. UV-C is defined as UV light having a wavelength in the range of 200 and 280nm. The method according to the invention comprises exposing human milk to UV-C in the range of 250nm to 270nm including a wavelength of 255nm, 260nm, 265nm. In an preferred embodiment, the method comprises exposing the human milk to UV-C at a wavelength of approximately 254nm.

The penetration depth of UV-C depends on solubility, density and turbidity of the liquid. UV treatment of opaque or turbid liquids can result in absorbance or reflection of the UV. Milk has a high absorption coefficient of 300cm-1 at a wavelength of 254nm compared to the absorption coefficient of liquids such as drinking water and beer which have absorption coefficients of 0.1 and 20cm-1, respectively (Shama G. Ultraviolet light. In: Encyclopaedia of food microbiology. Academic Press (Elsevier) 1999). Hence, treatment of milk with UV-C is difficult due to its high absorption coefficient.

As demonstrated herein, a strong positive correlation exists between the decimal reduction dosage and total solids in human milk, having an R² of 0.82 (P < 0.01). Accordingly, in one aspect of the invention, the method comprises measuring the total solids present in a volume of human milk and adjusting the dose of UV, preferably UV-C, required to inactivate a biological contaminant present in the milk.

The amount of UV exposure, or UV dose, is calculated according to the output of the UV source used in performing the method of the invention and the duration of exposure. Accordingly, the UV dose may be varied according to the output of a given UV source, the number of UV sources employed or the duration of exposure. UV dose may be expressed in a variety of ways and is typically defined as an amount of energy delivered per surface area treated (e.g. Millijoules per square centimetre, mJ/cm²). As described herein, the amount of UV exposure or UV dose is expressed as joules per litre (J/I). In a preferred embodiment, the method of the present invention comprises exposing human milk to UV light at a dose within the range of 100 - 10,000 J/I. More preferably, the human milk product is exposed to a UV light source at a dose selected from the group including 100, 200, 300, 400, 500, 600, 700, 800, 900, 1000, 1100 ,1200, 1300, 1400, 1500, 1600, 1700, 1800, 1900, 2000, 2100, 2200, 2300, 2400, 2500, 2600, 2700, 2800, 2900, 3000, 3100, 3200, 3300, 3400, 3500, 3600, 3700, 3800, 3900, 4000, 4100, 4200, 4300, 4400, 4500, 4600, 4700, 4800, 4900, 5000, 5100, 5200, 5300, 5400, 5500, 5600, 5700, 5800, 5900, 6000, 6100, 6200, 6300, 6400, 6500, 6600, 6700, 6800, 6900, 7000, 7100, 7200, 7300, 7400, 7500, 7600, 7700, 7800, 7900, 8000, 8100, 8200, 8300, 8400, 8500, 8600, 8700, 8800, 8900, 9000, 9100, 9200, 9300, 9400, 9500, 9600, 9700, 9800, 9900 and 10,000 J/I. Most preferably, the dose is at least 500 J/L.

According to the present invention, the activity of a bioactive component present in the milk is not substantially reduced after exposure to UV. As used herein, the term "bioactive component" refers to an agent having a biological effect. Examples include but are not limited to carbohydrates, lipids, peptides, fatty acids, enzymes, antibodies, growth factors, cytokines, chemokines, hormones, antimicrobial compounds, metabolites, vitamins and cells including but not limited to stem cells and immune cells such as leukocytes.

Preferably, the bioactive components are peptides, proteins, enzymes, antibodies, growth factors, hormones and steroids.

As used herein, the term "substantially reduced" refers to a reduction in the activity or concentration of a bioactive component or a bacteriostatic property of a human milk product which is greater than 50%. That is, according to the present invention, the activity or concentration of a bioactive component present in a human milk product, or a bacteriostatic property of a human milk product, after inactivation of a biological contaminant by UV exposure is at least 50% of the activity or concentration of the bioactive component, or a bacteriostatic property of a human milk product, before UV exposure. In a preferred embodiment, the reduction in activity or concentration of the bioactive component, or a bacteriostatic property of a human milk product, is not more than 40%, 30% or 20%. In a further preferred embodiment, the activity or concentration of a bioactive component, or a bacteriostatic property of a human milk product, is not reduced by greater than 10%.

As used herein, the term "bacteriostatic" refers the arrest, retardation or inhibition of the growth, division, multiplication or replication of bacteria.

In methods of thermal pasteurization, retention of immunological proteins is substantially reduced and the activity of bile salt stimulated lipase (BSSL) can be lost completely using Holder pasteurization. BSSL breaks down triacylglycerol into monoacylglycerides and free fatty acids and therefore aids in digestion of fat by infants. BSSL is a very heat labile enzyme and depending on exposure time the inactivation can start at 45°C. The supply of BSSL through human milk is particularly important in preterm infants due to their low endogenous lipase activity. Studies have shown that preterm infants fed thermal pasteurized human milk have a lower fat absorption and growth rate compared to preterm infants fed raw milk. It is likely that the inactivation of BSSL through the thermal pasteurization process is responsible for these lower growth rates.

Another enzyme completely lost with Holder pasteurization is alkaline phosphatase (ALP). ALP has been used in the dairy industry as a biomarker to detect inadequate pasteurization of the milk due to the fact that alkaline phosphatase in milk is inactivated slightly above the pasteurization condition that is required to destroy the targeted micro-organisms in milk.

Accordingly, in a preferred embodiment, the activity of a bioactive protein present in the milk is not substantially reduced. In a further preferred embodiment the protein is an enzyme. In still a further preferred embodiment the bioactive protein is selected from a group including bile salt stimulated lipase, alkaline phosphatase, lactoferrin, lysozymes, lactoperoxidase, myeloperoxidase, glutathione peroxidase, catalase, superoxide dismutase, or lactoferrin.

In still a further preferred embodiment, the bioactive protein is an antibody, growth factor, cytokine or chemokine.

In methods of thermal pasteurization, the bacteriostatic properties of human milk can be lost completely using Holder pasteurization.

Accordingly, in a preferred embodiment a bacteriostatic property of a human milk product is not substantially reduced.

In another preferred embodiment, the concentration of a bioactive protein present in the milk is not substantially reduced. In a further preferred embodiment the concentration of an enzyme present in the milk is not substantially reduced.

In still a further preferred embodiment the concentration of a bioactive protein selected from a group including bile salt stimulated lipase, alkaline phosphatase, secretory IgA (slgA), lactoferrin, and lysozyme is not substantially reduced. In still a further preferred embodiment, the concentration of bile salt stimulated lipase, alkaline phosphatase and/or lactoferrin is not substantially reduced.

In yet another preferred embodiment, the activity of anti-oxidant components such as, but not limited to the group comprising lactoperoxidase, myeloperoxidase, glutathione peroxidase, catalase, superoxide dismutase, lactoferrin, vitamin C and vitamin E is not substantially reduced. Accordingly, in yet another preferred embodiment the antioxidant activity of the milk is not substantially reduced.

As discussed, the efficacy of exposure to UV decreases in cases where turbid liquids such as milk are involved, on account of increased absorbance or reflection of UV. Various flow-through UV reactors have been designed which involve flowing a liquid through a pipe or conduit and exposing the liquid to UV. Such reactors have been designed for the treatment of large volumes of liquid.

Treating opaque liquids in a flow-through reactor using laminar flow presents a problem because the layers in the centre of a flow through the reactor will not be exposed to the UV.

Human milk from an individual can only be collected in small volumes. For example the volume of breast milk expressed by an individual at any given time has a large amount of inter-individual variability. Studies have demonstrated that the average weight of breast milk that may be expressed can range from approximately 30 grams to approximately 150 grams (i.e. approximately 30 to 150ml). As such, such small volumes would be lost in large reactors and flow through reactors. Additionally, as highlighted above, other problems arise where there is a need to pump milk in a flow through reactor. Furthermore, when an overly turbulent flow is applied to milk, undesirable properties can be imparted to the milk which include formation of butter from coalescence of milk fat globules.

According to the present invention, a flow such as a vortical flow is imparted to milk which facilitates the exposure of a contaminant in the milk to the UV. As used herein "vortical flow" refers to a flow of liquid wherein the liquid flows in layers in a rotary or spinning motion about an imaginary axis. The axis may be straight or curved. There may be some disruption or mixing in the flow between layers and some turbulences which may occur at various points in the flow of a liquid within a container but the majority of the liquid flows in a vortical fashion.

According to the method of the present invention, human milk is retained within a container for containing the milk and a vortical flow is imparted to the milk. The application of a vortical flow of a sufficiently reduced velocity, to the milk facilitates the exposure of a contaminant to the UV while maintaining the consistency of the milk. That is, by imparting a vortical flow of a sufficiently reduced velocity to the milk, undesirable changes to the consistency of the milk such as formation of butter from coalescence of milk fat globules resulting from applied to the milk may be avoided. As used herein, velocity refers to the rotational speed or strength of rotation. Therefore, a vortical flow having a sufficiently reduced velocity is a vortical flow that has a speed or strength of rotation that is decreased so as to not impart undesirable changes to the milk. The flow must also be such that the velocity is sufficiently reduced, but flow is continuous such that the milk continues to move to ensure that it facilitates the exposure of a contaminant in the milk to the UV light without imparting and any undesirable physical damage to the milk.

There may be some disruption or mixing in the flow and some turbulences which may occur at various points in the flow of a liquid within a container but the majority of the liquid flows in a vortical fashion. The disruption or mixing and turbulences which may occur facilitate the exposure of a contaminant in the milk to the UV light.

A vortical flow may be imparted to the milk by any means known to the skilled addressee. This enables the milk to be flowed in a gentle fashion which facilitates the exposure of a contaminant in the milk to the UV light without imparting and any undesirable physical damage to the milk, such as the formation of a butter-oil layer on the milk surface or the formation of butter. In a preferred embodiment, a vortical flow is imparted by a vortex that is created using a magnetic bar and a device to rotate the magnetic bar. In still a further preferred embodiment, the device to rotate the magnetic bar is a magnetic stirrer.

In practice, although not limited to this example, a magnetic bar is placed into a container for containing the milk. A low velocity vortex and hence vortical flow in the milk is achieved by rotating the magnetic bar with the magnetic stirrer. The size of the magnetic bar may be varied according to the volume of milk to be treated or the size of the container. For example, where a larger container is used to contain the milk, a larger magnetic bar may be employed. Alternatively, where a smaller volume of milk is to be treated, a smaller magnetic bar may be used. Similarly, the speed at which the magnetic bar rotates may also be varied. For example, where a larger volume of milk or a smaller container containing the milk is used, the speed at which the magnetic bar rotates may be increased or decreased, respectively, to a speed which maintains a vortical flow and which facilitates exposure of a biological contaminant in a milk product to the UV light.

Therefore a balance may be applied in creating a fast enough flow for optimal microorganism exposure to the UV-C photons and minimizing the risk of damaging the human milk. This can be achieved by adjusting the revolution speed and/or the method of stirring. Furthermore the size and shape of the stirring means may be adjusted to reduce shear forces. A rotating container may also be used.

As exemplified herein, a vortical flow having a sufficiently reduced velocity may be applied to 380ml of human milk in a container for containing 400ml of a liquid using a magnetic bar of 8x40mm rotated at a rate of 500rpm or equivalent thereof.

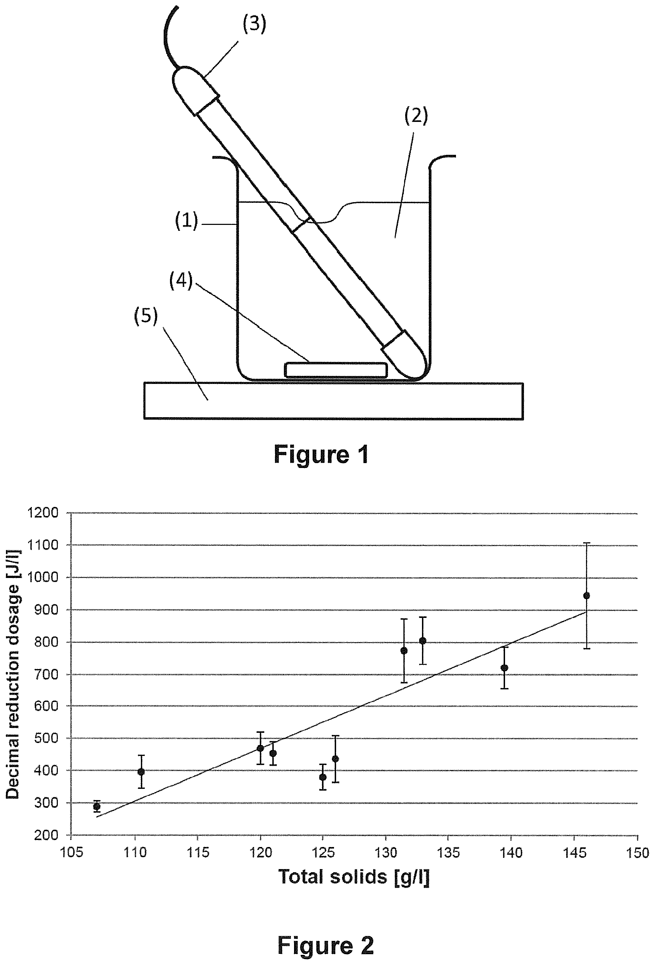

Having reference to Figure 1, a preferred embodiment of the apparatus not according to the invention as exemplified therein comprises a container (1), for containing a volume of a milk product (2) into which a UV light source (3) is introduced. The introduction of the UV light source to the milk product enables the exposure of a contaminant present in the milk product to the UV light which in turn inactivates the contaminant after a sufficient amount of exposure. To facilitate exposure of the contaminant to the UV, a vortical flow is imparted to the milk. In this preferred embodiment, a vortical flow is created using a magnetic bar (4) which is caused to rotate at a rate sufficient to create and to maintain the vortex. The magnetic bar is caused to rotate through the use of a magnetic stirrer (5). The magnetic stirrer may be controlled so as to specify the rate at which the magnetic bar rotates, such that a low velocity vortical flow is imparted to the milk and maintained.

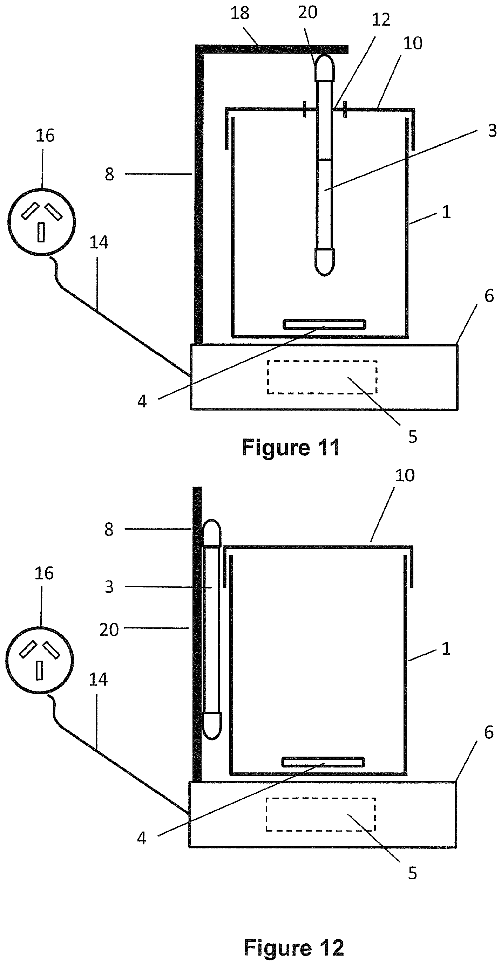

Figure 11 schematically illustrates a structural arrangement for an apparatus not according to an embodiment of the invention. This arrangement of apparatus includes a stand (8) having a base (6) wherein the magnetic stirrer (5) (for driving the magnetic bar (4)) is incorporated within the base (6). The base (6) is preferably configured such that it appropriately positions and holds the container (1) when the container (1) is placed thereon. The container (1) includes a cover (10), having an aperture (12), wherein the cover (10) is relatively attachable to the container (1) such that spillage and contamination of a milk product within the container is minimized. The stand (8) includes an overhead structure (18) which includes an electrical socket (20) inside which the UV light source (3), which is a lamp, is plugged. The overhead structure (18) extends over the container (1) when the container (1) is located on base (6) such that the UV lamp (3) which passes through the aperture (12) in cover (10) is supported and positioned within the container (1) at an appropriate depth. Electrical connections for driving the stirrer (5) and the socket (20) for the UV lamp (3) are via an electrical cable (14) and plug (16) for connection to a normal/household GPO. It is anticipated that the separate component of this apparatus, namely the stand (8) (incorporating the base (6) with magnetic stirrer (5), overhead structure (18), socket (20) and electrical cable and plug (14/16), UV lamp (3), container (1) and cover (10), and magnetic bar (4), may be packaged and sold either individually or together as a unit/single package together with instructions for use of the apparatus.

In a preferred embodiment, the apparatus comprises a container into which a volume of human milk may be directly expressed, collected or stored. The volume of breast milk expressed by an individual at any given time has a large amount of inter-individual variability. Studies have demonstrated that the average weight of breast milk that may be expressed can range from approximately 30 grams to approximately 150 grams (i.e. approximately 30 to 150ml). In a preferred embodiment, the container is for a volume of human milk ranging from approximately 30ml to approximately 10000ml. In a preferred embodiment the container is for a volume of a human milk product selected from 50ml, 100ml, 200ml, 300ml, 400ml, 500ml, 600ml, 700ml, 800ml, 900ml, 1000ml, 1100ml ,1200ml, 1300ml, 1400ml, 1500ml, 1600ml, 1700ml, 1800ml, 1900ml, 2000ml, 2500ml, 3000ml, 3500ml, 4000ml, 4500ml, 5000ml, 5500ml, 6000ml, 6500ml, 6500ml, 700ml, 7500ml, 8000ml, 8500ml, 9000ml, 9500ml and 10000ml.

The container may be a closed or open and comprised of any suitable material including glass, stainless steel or food grade materials including plastics selected from the group including Polyethylene Terephthalate (PET), High Density Polyethylene (HDPE), Low Density Polyethylene (LDPE), Polyvinyl Chloride (PVC) and Polypropylene (PP).

In a preferred embodiment the apparatus further comprises a cover adapted to engage with the container. Alternatively, the container is adapted to receive the cover. The cover, such as a lid, is capable of preventing leakage or spillage from the container. The cover may also serve to prevent the introduction of a contaminant into the container during exposure of a milk product retained within the container to UV light or after the exposure, such as during storage of the milk product. In a further preferred embodiment, the cover is adapted to receive a UV light source and/or a means to impart a vortical flow to the milk inside said container.

For example, the cover may be adapted to receive a UV light source and/or a means to impart a vortical flow to milk inside said container such as by an aperture that may be opened and closed.

The UV light source may comprise one or more UV lamps. The UV lamps may be of any particular shape or size. In a preferred embodiment, the UV light source emits UV-C, preferably in the range of 250nm to 270nm, and most preferably at 254nm. The UV light source may be arranged such that it is located inside or outside the container and may be orientated in any particular fashion sufficient to expose a human milk product in the container to UV light, preferably UV-C. Where the UV light source is positioned outside of a container, the one or more UV lamps may be positioned at various points around the container. In a preferred embodiment the UV light source is introduced into the container to contact a human milk product in the container. In certain embodiments where the UV light source is located on the outside of a container, the container will be formed from a material allowing for sufficient transmission of UV light through a surface of the container, preferably with minimal absorbance of the UV light by the container.

Figure 12 schematically illustrates a structural arrangement for an apparatus according to an embodiment of the invention, wherein the UV light source is located on the outside of a container. This arrangement of apparatus includes a stand (8) having a base (6) wherein the magnetic stirrer (5) (for driving the magnetic bar (4)) is incorporated within the base (6). The base (6) is preferably configured such that it appropriately positions and holds the container (1) when the container (1) is placed thereon. The container (1) includes a cover (10), wherein the cover (10) is relatively attachable to the container (1) such that spillage and contamination of a milk product within the container is minimized. The stand (8) includes an electrical socket (20) inside which the UV light source (3), which is a lamp, is plugged. The stand (8) extends adjacent the container (1) when the container (1) is located on base (6) such that the UV lamp (3) is supported and positioned at an appropriate proximity to the container (1). Electrical connections for driving the stirrer (5) and the socket (20) for the UV lamp (3) are via an electrical cable (14) and plug (16) for connection to a normal/household GPO. It is anticipated that the separate component of this apparatus, namely the stand (8) (incorporating the base (6) with magnetic stirrer (5), socket (20) and electrical cable and plug (14/16), UV lamp (3), container (1) and cover (10), and magnetic bar (4), may be packaged and sold either individually or together as a unit/single package together with instructions for use of the apparatus.

The means that imparts a flow that is a vortical to the milk may include stirring devices including overhead stirrers and magnetic stirrers. Overhead stirrers may comprise a shaft with a blade disposed at one end which may be introduced into a liquid and rotated in the milk so as to create a vortical flow. Alternatively, a magnetic stirring device may be used. Alternatively, the container containing the milk may be moved or rotated so as to impart a vortical flow. In a preferred embodiment, the means adapted to impart a vortical flow to the milk is a magnet and magnetic stirrer. In operation a magnetic stirrer applies a magnetic force to a magnet which causes the magnet to rotate so as to generate a vortex in the milk product and thereby imparting a vortical flow to the milk. Alternatively, the container may be moved relative the UV source so as to create a vortex and hence a vortical flow in the milk.

The magnet may be of any appropriate shape or size. Preferably, the magnet is a magnetic stirring bar. The size of the magnetic bar may be varied according to the volume of milk to be treated or the size of the container. For example, where a larger container is used to contain the milk, a larger magnetic bar may be employed. Alternatively, where a smaller volume of milk is to be treated, a smaller magnetic bar may be used. In a preferred embodiment, the container is adapted to contain 400ml of a human milk product and the magnetic bar is 8x40mm. A vortex may be created to impart a substantially vortical flow in a volume of 380ml of human milk in a container adapted to contain 400ml, when a magnetic bar of 8x40mm is rotated at 500rpm.

According to a further embodiment, the UV light source may operate as the means by which a vortex is applied to the milk. For example, a UV lamp may be introduced to the milk retained within the container and caused to move so as to create a vortex and hence vortical flow in the milk. For example, a UV lamp may be inserted into a volume of milk retained within the container and rotated in a stirring fashion to create a vortex and hence vortical flow in the milk.

According to a further aspect, the present invention provides a human milk product prepared according to the methods as set forth in this specification. It is expected that a human milk product prepared according to the methods of the present invention, having a biological contaminant present in the milk product inactivated and/or reduced, may be stored for a longer period of time as compared to unpasteurized human milk products. Additionally, the milk product according to the present invention will have a superior bioactivity as compared to human milk products that have been pasteurized using thermal methods.

The present invention will now be more fully described by reference to the following nonlimiting Examples.

### EXAMPLES

### Example - 1 UV exposure of milk

Ten frozen samples of human milk were donated from mothers with excess milk supply. Milk was stored in a -20°C freezer prior to the experiment. Total solids in the human milk samples were determined using a mid-infrared analyser (HMA - Human Milk Analyser, Miris AB, Uppsala, Sweden). Then, the samples were centrifuged (Allegra X-12R, Beckman Coulter Inc., Brea, CA, USA) and total solids contents adjusted with removing or adding cream of the same human milk sample. The final total solids content of the samples had a range from 107 to 146 g/l within the 10 samples. A summary is provided in the Table 1.

**Table 1: Total solids, total protein, lactose and fat of human milk samples**

| Sample No. | 1 | 2 | 3 | 4 | 5 | 6 | 7 | 8 | 9 | 10 |
|---|---|---|---|---|---|---|---|---|---|---|
| Total solids [g/l] | 107.0 | 110.5 | 120.0 | 121.0 | 125.0 | 126.0 | 131.5 | 133.0 | 139.5 | 146.0 |
| Total protein [g/l] | 7.0 | 17.5 | 16.0 | 20.5 | 10.0 | 9.0 | 15.0 | 14.0 | 14.5 | 10.0 |
| Lactose [g/l] | 68.0 | 72.5 | 72.5 | 87.5 | 71.5 | 69.5 | 65.0 | 65.5 | 68.5 | 52.0 |
| Fat [g/l] | 26.0 | 18.0 | 30.0 | 10.0 | 39.0 | 42.5 | 50.0 | 52.0 | 55.0 | 81.0 |

Each human milk sample (380ml; n=10) was transferred into a 400ml PYREX glass beaker No. 1003. A partially covered (57mm open out of 211mm arc length) germicidal UV-C lamp (95% of UV-output at 253.7nm) (GPH287T5L, Infralight Pty Ltd, Helensburgh, NSW, Australia) was put into the glass beaker (Figure 1).

The UV output of the 57mm open lamp was 1.1W. During UV-C treatment, the germicidal UV-C lamp (95% of UV-output at 253.7nm) (GPH287T5L, Infralight Pty Ltd, Helensburgh, NSW, Australia) was put diagonally into the container (Figure 1). During UV-C treatment, the milk was stirred with an 8x40mm magnetic stirrer bar at 500rpm (C-MAG HS 7, IKA, Staufen, Germany) to create a low velocity vortex. The human milk was exposed to UV-C and 1ml samples were taken at different time points and portioned in to tubes for the different analyses. Aliquots for enzymatic and fatty acid analyses (described below) were kept frozen at -80°C until the assay was performed. Bacterial analyses were performed immediately.

### Example 2 - Bacterial Analysis

*Staphylococcus epidermidis* (ATCC 12228), *Enterobacter cloacae* (ATCC 27508), *Bacillus cereus* (ATCC 10702) (American Type Culture Collection Inc, Manassas, VA, USA) and *Escherichia coli* K12 (ATCC1498, Southern Biological, Nunawading, Vic, Australia) were cultured in nutrient broth (Nutrient Broth No. 2, Oxoid Australia Pty Ltd, Adelaide, SA, Australia) over night at 33°C. *Staphylococcus aureus* (ATCC 6538) (American Type Culture Collection Inc, Manassas, VA, USA) was cultured in tryptic soy broth (BBL Trypticase Soy Broth, Becton Dickinson & Co, Franklin Lakes, NJ, USA) over night at 33°C. Then, bacteria were enumerated using the optical density method with previously constructed standard curves. Cultures were diluted and inoculated into the total solids adjusted human milk samples to a maximum accepted concentration in milk banks of 10⁵ CFU/ml (colony forming units per millilitre).

An exponential reduction of *E. coli, S. epidermidis, Ent. cloacae, B. cereus* and S. *aureus* over time was observed when irradiated with ultraviolet light as in Example 1. The decimal reduction dosages were not significantly different within the five different species of bacteria with 594±265, 569±209, 565±178, 640±189 and 635±268 J/I, respectively.

A high positive correlation (P<0.01) was found between the decimal reduction dosage and total solids measured in the human milk. The samples had a total solids concentration of 107.0, 110.5, 120.0, 121.0, 125.0, 126.0, 131.5, 133.0, 139.5 and 146 g/l and the correlating decimal reduction dosage were 289±17, 396±52, 470±51, 454±36, 380±39, 437±72, 774±98, 805±74, 721±64 and 945±164 J/I, respectively (Figure 2).

### Example 3 - Bile salt stimulated lipase activity

The bile salt stimulated lipase (BSSL) activity in human milk was determined using a lipase assay kit (QuantiChrom Lipase Assay Kit, BioAssay Systems, Hayward, CA, USA). Frozen (-80°C) human milk samples (n=10) as in Example 1 were thawed and brought to 37°C, diluted with DDI (1/100, v/v) and the assay was performed in duplicate according to kit instructions. The absorbance was determined with a spectrophotometer (PowerWave, Biotek, Winooski, VT, USA) and transformed into BSSL activity per milliliter (U/ml) based on the formula in the kit instruction. The kit linear detection range is between 40 and 1600 U/ml lipase activity in the 96-well plate assay. Unit definition: one unit of enzyme catalyzes the cleavage of 1.0 µM of substrate per minute under the assay conditions (pH 8.5). The coefficient of variation (CV) within groups was <7%.

Untreated human milk samples had a BSSL activity of 116.5±36.6 U/ml. After treatment with a UV-C dosage as in Example 1 of 1389, 2084, 2779, 3474 and 4863 J/I the BSSL activity was not significantly reduced with 113.1±34.0, 112.7±33.3, 114.3±34.6, 113.6±33.7 and 115.3±34.4 U/ml, respectively (n=10).

### Example 4 - Alkaline Phosphatase assay

The alkaline phosphatase (ALP) causes the hydrolysis of the p-nitrophenyl phosphate and forms a yellow complex whose intensity, measured at 405nm, is directly proportional to the concentration of ALP in the sample. ALP activity was analysed using the enzymatic assay based on Walter and Schütt (23). The frozen (-80°C) human milk samples as in Example 1 where thawed and brought to 37°C, diluted with DDI (1/4, v/v), 5µl samples in duplicates where added to 135µl of substrate (1M diethanolamine, 0.5mM MgCl₂, pH 10.3) into a 96-well plate. Then, 10µl of the colour reagent (10mM p-nitrophenyl phosphate) was added into the wells and the plate was incubated at 37°C for 30 minutes. The absorbance was determined with a spectrophotometer at 405nm (PowerWave, Biotek, Winooski, VT, USA) and transformed into alkaline phosphatase activity per milliliter (U/ml) using a standard curve. Unit definition: one unit of enzyme hydrolyses 1.0 mM of p-nitrophenyl phosphate per minute under the assay conditions. The recovery assay was 94±9% and the intra-assay variation was <6%.

Untreated human milk samples had an ALP activity of 0.200±0.050 U/ml. After treatment with an UV-C dosage as in Example 1 of 2084, 3474 and 4863 J/I the ALP activity was not significantly reduced with 0.199±0.056, 0.199±0.047 and 0.204±0.057 U/ml respectively (n=10).

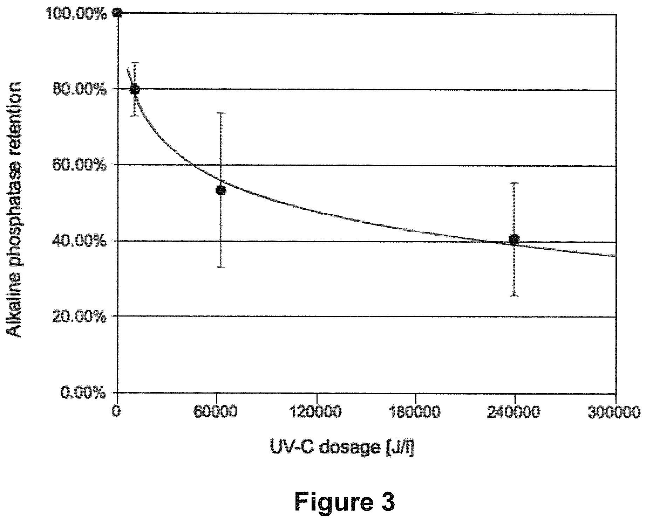

In an overexposure experiment were the human milk was treated significantly longer than needed to reduce the microbial load by 5-log10 a significant decrease in ALP activity retention with 79.8±7.1%, 53.4±20.2% and 40.6±15.0% by an UV-C dosage of 10,400, 62,526 and 239,684 J/I, respectively (n=3) (Figure 3), was found.

### Example 5 - Fatty acid analysis

Fatty acids (FA) were analysed using the extraction and trans-esterification method based on Mitoulas et al. (24). FA were extracted with chloroform/methanol (2/1, v/v) using butylated hydroxyanisole as an antioxidant. FA methyl esters from milk lipid extracts were prepared by acid transmethylation using 1% H₂SO₄ in methanol. The fatty acid methyl esters were then separated and quantified by gas chromatography (GC-2010, Shimadzu Co., Kyoto, Japan) using a 50m capillary column with 0.32mm inner diameter coated with 0.25µm BPX-70 (SGE Pty Ltd., Ringwood, VIC, Australia). Each sample (3µl) was then injected onto the column using an automatic injector (AOC-20i, Shimadzu Co., Kyoto, Japan) at a split ratio of 20:1. The injector temperature was set at 250°C and the detector (flame ionisation) temperature at 300°C. The initial oven temperature was 130°C. The temperature was initially programmed to rise to 155°C within 5min, then slowly to 165°C within 1min, then to 230°C within 5min and finally to 250°C within 10min where it is held for 5 minutes. Helium was used as the carrier gas at a velocity of 4 ml/min. Fatty acids were identified based on retention time to authentic lipid standards (Sigma-Aldrich Co., St Louis, MO, USA). Individual FA peaks were quantified as the total area under FA peaks. The coefficient of variation of the area under the FA peaks over 5 separate extractions was <4.2%.

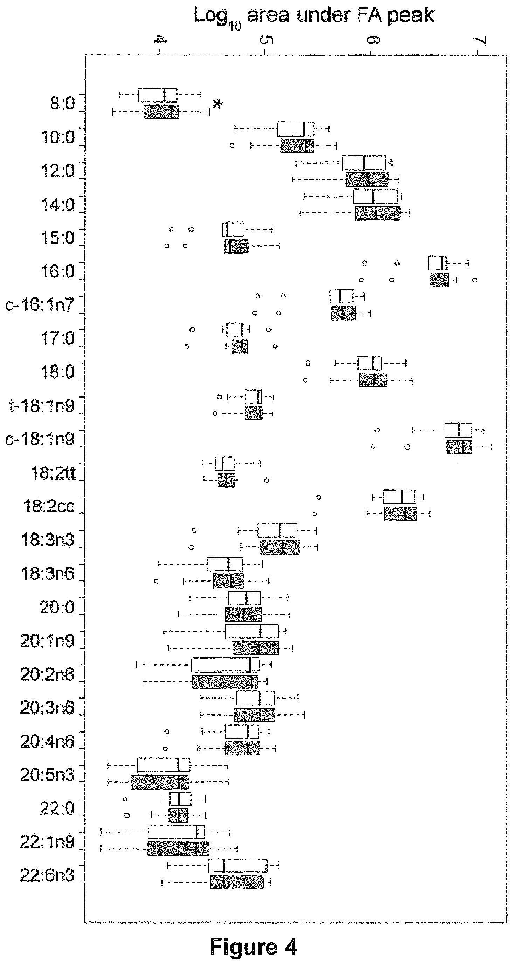

The FA concentration had a large variation between the individual untreated samples but did not significantly change during the UV-C treatment as in Example 1. Ten human milk samples as in Example 1 were analysed and all fatty acids (FA) were detected in all ten samples except the FA 17:0, 20:5n3, 20:0 and 22:1n9 which were detected in nine samples and the FA 18:2tt in eight samples. The FA 8:0 had the smallest and the c-18:1n9 the largest concentration with a median area untreated of 11,270 (range 4233 to 24,513) and 6,819,353 (1,157,398 to 11,613,614), respectively. The median area of those two FA treated with 4863 J/I UV-C was 13,304 (3612 to 30,132) and 7,285,795 (1,067,547 to 13,459,439), respectively (Figure 4).

Hence, UV-C irradiation facilitates the required reduction in vegetative bacteria contamination and preserves the activity of heat sensitive enzymes such as BSSL and ALP with no change of FA thereby improving the quality of donor human milk.

### Example 6 - Inactivation of Virus by UV exposure

Murine or human CMV was innoculated into cell culture media or pasteurized breast milk and dispensed into a container to provide a 0.5mm layer. Samples were subsequently exposed to a UV light source for a period of 10, 20, 30 or 60 seconds at distances of 1, 2, 3, and 4cm from the UV light source. The difference in distance of the UV light source facilitated the delivery of a different dose of UV to the samples. Subsequently, inactivation of virus present in the samples was assessed using a plaque assay or a Tissue Culture Infective Dose (TCID)₅₀ assay.

For the plaque assay, serial dilutions of Murine CMV (MCMV) virus stock or MCMV- spiked breast milk were used to inoculate Murine Embryonic Fibroblasts (MEFs). After incubation at 37°C, 5% CO₂ for 1 hour the inocula were aspirated off and all wells were washed. The wash solution was aspirated and 0.5% methylcelluose/MEM + 2% NCS was layered over the cells. The plates were incubated for 4 to 5 days at 37°C, 5% CO₂ and stained with 1mL of methylene blue plaque assay stain per well. After 2 to 3 days at room temperature, the stain was washed off and the plates were air-dried prior to plaque counting. Viral titres were calculated according to the following equation: plaque forming units (pfu)/mL = number of plaques per well x dilution factor x 5. The results for this assay are expressed in the Table 2 below:

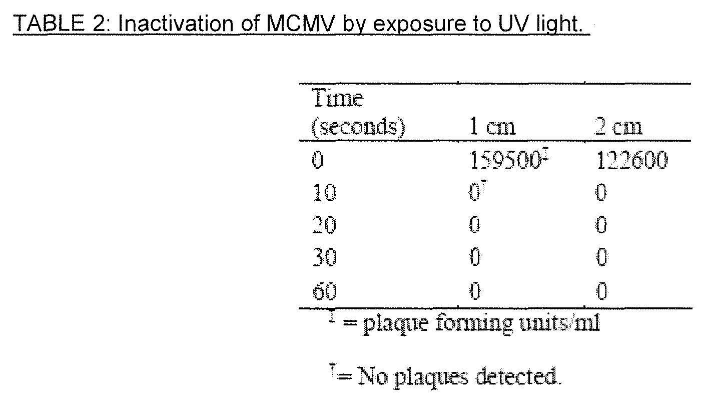

These Data demonstrate the ability of exposure to UV light to inactivate virus present in human milk.

For the TCID₅₀ assay, media or breast milk spiked with Human CMV (HCMV) were prepared. Two replicates of media or milk either exposed to UV at the different distances, or untreated, were serially diluted and added cultured human foreskin fibroblasts (HFFs) and incubated for 3 weeks. The cyotpathic effect of the viruses present in the treated or untreated samples was subsequently assessed on a daily basis. Results were analysed using a calculator created by Brett D. Lindenbach (Yale University) based on the protocol of Reed and Muench (Reed LJ, Muench HA. The American Journal of Hygiene. 1938; 27:493-497). Values are provided as TCID₅₀ / ml.

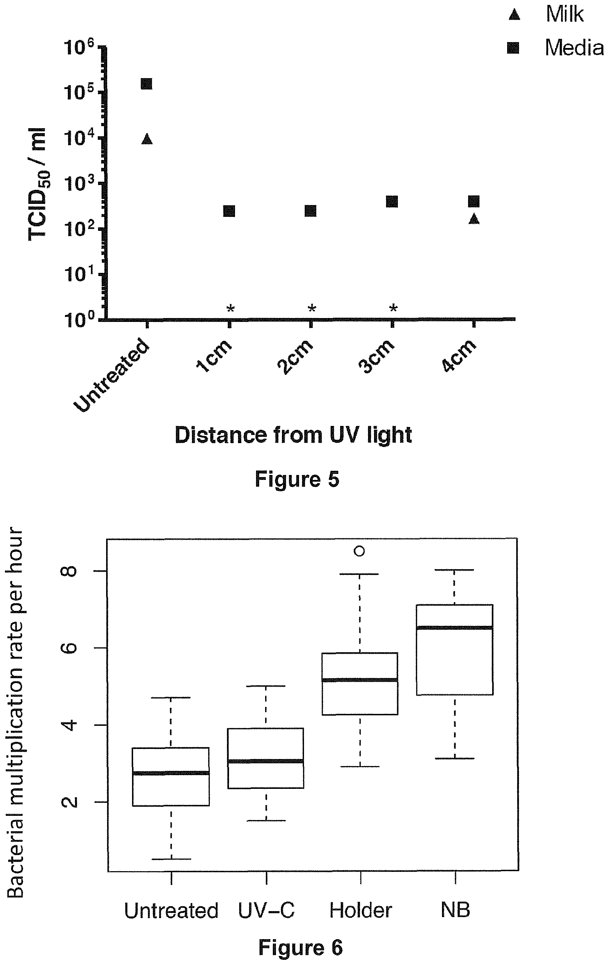

The results of this study demonstrate that exposure of human milk containing virus to UV light is capable of inactivating the viruses leading to a reduced capacity of the virus to infect cells. Indeed, the TCID₅₀ / mL values in milk samples exposed at 1, 2 and 3cm were below the level of detection (Figure 5).

While the experimental design of the present example was not performed under conditions where human milk was contained within a container and subjected to a vortical flow, the results of the assay allow the skilled address to predict that similar or greater levels of inactivation of virus will occur under such conditions. According to a prophetic example, replicate samples of human milk would be spiked with a defined dose of virus. The milk samples would then be exposed to UV light as described in Example 1. The degree of inactivation of virus in the milk exposed to UV at different amounts of UV exposure compared to spiked samples not exposed to UV could then be assessed using a plaque forming assay or a TCID₅₀ assay. Based on the data obtained in Example 6, the skilled addressee would predict that an increase in UV exposure would correlate with an increase in inactivation of virus.

### Example 7 - Bacteriostatic Property of UV Treated Milk and Holder Pasteurized Milk

### Holder pasteurization:

Part of each of the ten frozen samples of human milk (1.6 ml; n=10) which were donated from mothers (Example 1) was transferred into a 2 ml polypropylene micro tube. Samples were then placed into a preheated water bath (CC-1, Huber GmbH, Offenburg, Germany) and brought to 62.5°C for 30 minutes, then immediately cooled down in an ice bath. The samples were kept frozen at -80°C until the laboratory analyses were performed.

### Bacteriostatic property analysis

*Escherichia coli* K12 (ATCC1498, Southern Biological, Nunawading, Vic, Australia) and *Staphylococcus aureus* (ATCC6538, American Type Culture Collection Inc, Manassas, VA, USA) were cultured in nutrient broth (Nutrient Broth No. 2, Oxoid Australia Pty Ltd, Adelaide, SA, Australia) overnight at 37°C. After enumeration using the optical density method with previously constructed standard curves, the cultures were diluted and inoculated into untreated, UV-C irradiated and Holder pasteurized samples to bacterial loads of *E. coli* and S. *aureus* of 2000 CFU/ml (colony forming units per millilitre). All samples were plated in duplicate onto eosin methylene blue agar and mannitol salt agar (Oxoid Australia Pty Ltd, Adelaide, SA, Australia / Plain agar, Southern Biological, Nunawading, Vic, Australia) immediately after inoculation and after 2 hours of incubation at 37°C. The plates were then incubated at 37°C overnight and the numbers of colonies enumerated to determine the bacterial number based on colony forming units per millilitre (CFU/ml).

There was no difference in the growth rates of *E. coli* and S. *aureus* over the two hour incubation time at 37°C (p=0.69). Therefore, the two species were grouped together for the remaining statistical analyses.

### Untreated human milk had a bacterial growth rate of 2.7±1.1 fold per hour.

UV-C irradiated human milk (4683 J/I) had a bacterial growth rate of 3.1±0.9 fold per hour. This growth rate was not significantly different to untreated milk (p=0.75).

Holder pasteurized human milk had a bacterial growth rate of 5.1±1.4 fold per hour. The bacterial growth rate of Holder pasteurized human milk was significantly higher than both untreated and UV-C irradiated human milk (p<0.001).

Nutrient broth had a bacterial growth rate of 5.9±1.5 fold per hour, which was not significantly different from that of Holder pasteurized human milk (p=0.13), but was significantly higher than both untreated and UV-C irradiated human milk (p<0.001) (Figure 6).

### Example 8 - Immunological Protein Concentration in Human Milk following UV treatment and Holder Pasteurization

Ten samples of human milk were subjected to UV treatment or holder pasteurization as described in Examples 1 and 7, respectively.

The content of slgA and lactoferrin in the human milk samples was quantified using a standard sandwich ELISA method as previously described (Czank C, et al Pediatr Res 2009; 66:374-379). All antibodies and standards were purchased from MP Biomedicals Australasia (New South Wales, Australia). The recovery assay for slgA was 85±4% (n=6) and for lactoferrin 82±9% (n=6). Lysozyme content of human milk samples was quantified using a Human Lysozyme enzyme immune assay (EIA) kit (Biomedical Technologies, Inc., MA) according to manufacturer's instructions.

The results for these assays are expressed in the Table 3 below:

**Table 3: Concentration of immunological proteins of untreated, UV-C irradiated and Holder pasteurized samples. (mean±SD, n=10).**

| | slgA | | Lactoferrin | | Lysozyme | |
|---|---|---|---|---|---|---|
| | concentration | retention | concentration | retention | concentration | retention |
| Treatment | [g/l] | [%] | [g/l] | [%] | [g/l] | [%] |
| untreated | 3.45±0.70 | 100% | 3.00±0.83 | 100% | 0.024±0.015 | 100% |
| UV-C 2084 J/I | 3.29±0.65 | 95±5% | 2.86±0.87 | 95±6% | 0.021±0.013 | 91±7% |
| UV-C 3474 J/I | 3.22±0.64* | 94±4% | 2.81±0.87 | 93±10% | 0.019±0.011* | 84±10% |
| UV-C 4683 J/I | 3.07±0.63** | 89±4% | 2.63±0.86 | 87±11% | 0.017±0.009** | 75±9% |
| Holder | 1.67±0.32** | 49±3% | 0.26±0.14** | 9±4% | 0.010±0.008** | 41±14% |

| | | | | | | |
|---|---|---|---|---|---|---|
| *p<0.05, **p<0.001 | | | | | | |

The samples irradiated with a dosage of 3474 J/I of UV-C had a significantly lower concentration of slgA (p=0.036) and lysozyme (p=0.032) compared to the untreated sample. When treated with 4683 J/I the significance increased to p<0.001 for both proteins. Dosages used did not significantly reduce the concentration of lactoferrin (p=0.28).

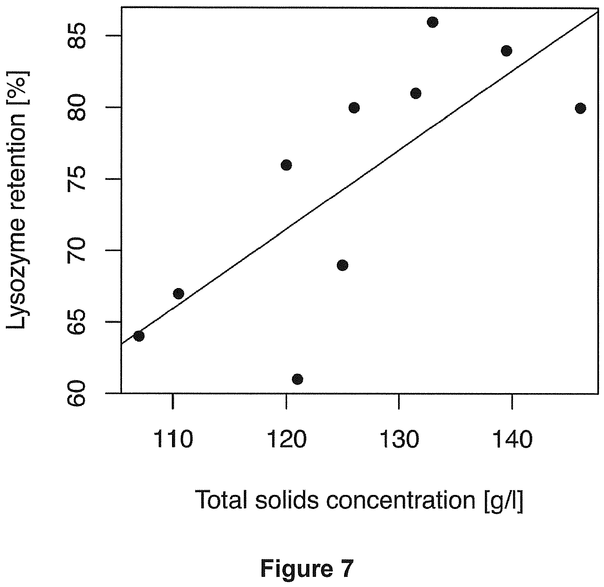

Greater lysozyme retention was seen with higher concentrations of total solids (p<0.001) (Figure 7). For each additional g/l of total solids in human milk the retention of lysozyme was increased by 0.55% percentage points. No significant correlation was found between the total solids concentration and slgA (p=0.45) or lactoferrin (p=0.23) retention after UV-C irradiation.

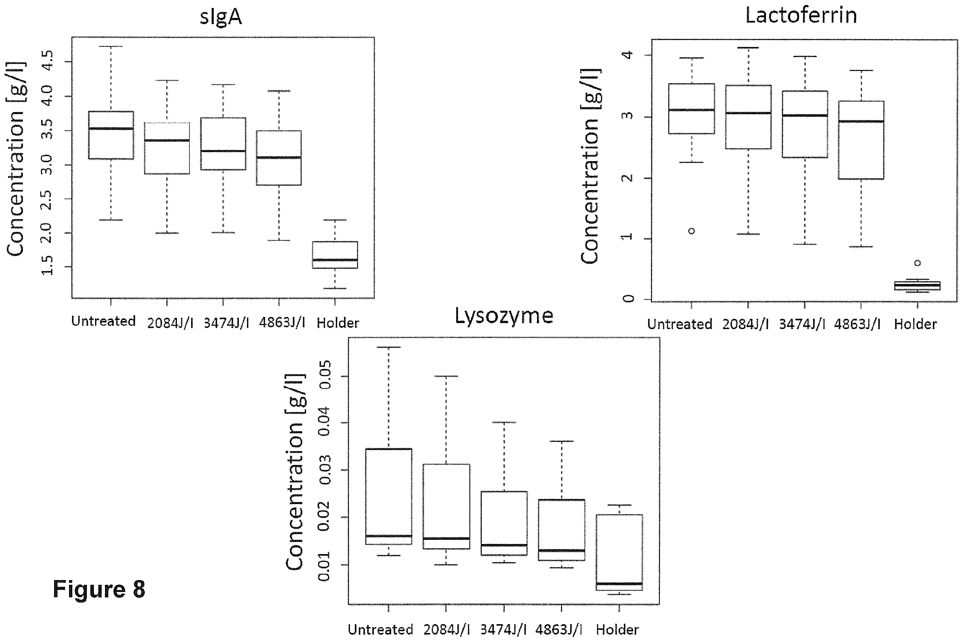

Significant reductions in slgA, lactoferrin and lysozyme were observed after Holder pasteurization (p<0.001) (Table 2)(Figure 8). No correlation was found between the concentration of total solids and the retention of immunological proteins during Holder pasteurization (p=0.76).

### Example 9 - Immunological Protein Concentration and bacteriostatic Property of Human Milk

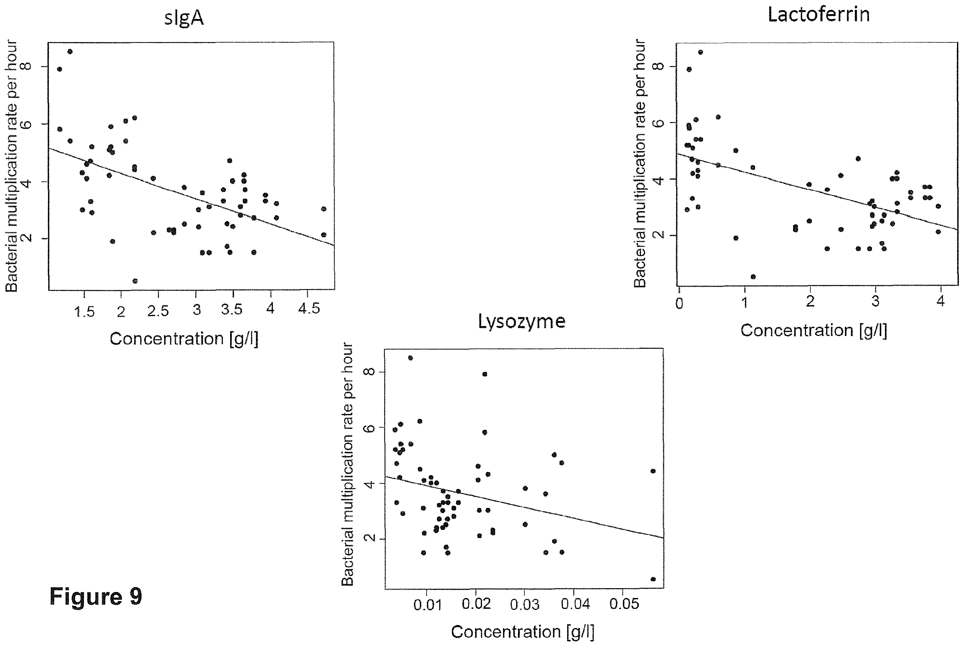

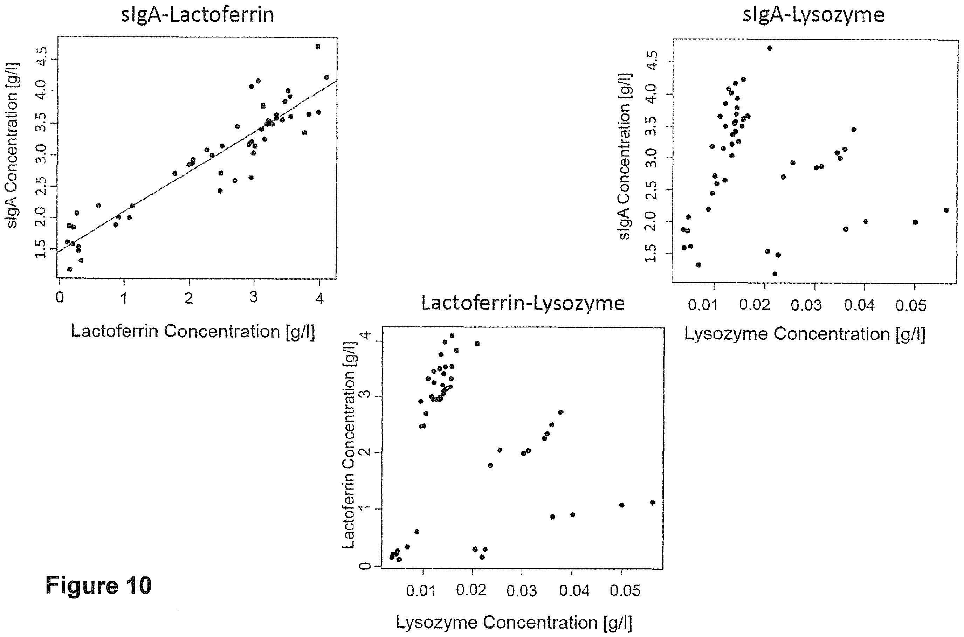

After accounting for the possible effect of the different treatments (untreated, UV-C irradiated, Holder pasteurized), bacterial growth rate per hour was lower with higher concentrations of slgA (p<0.001), lactoferrin (p<0.001) and lysozyme (p<0.019) individually and also as a sum of the three together (p<0.001) (Figure 9). Human milk samples showed a high correlation between the concentration of slgA and lactoferrin (p<0.001) but no significant correlation was found between slgA and lysozyme (p=0.35) and lactoferrin and lysozyme (p=0.25) (Figure 10).

### Example 10 - Anti-oxidant activity after UV-C treatment and Holder Pasteurization

Expressed human milk is exposed to oxygen, light, ionizing radiation and temperature changes during breast expression and storage. Environmental stresses such as pasteurization can cause the production of reactive oxygen species (ROS) in human milk. Temperature increase can result in a higher cellular ROS production and can exceed the cellular antioxidant capacity subsequently resulting in an increased ROS concentration.

Human milk contains anti-oxidant components such as lactoperoxidase, myeloperoxidase, glutathione peroxidase, catalase, superoxide dismutase, lactoferrin, vitamin C and vitamin E. This example investigates the hydrogen peroxide (H₂O₂) status of human milk and whether Holder pasteurization or UV-C irradiation changes the H₂O₂ level and hence the activity of anti-oxidant components in human milk.

Human milk samples were donated and stored in a -20°C freezer prior to the experiment. Samples were treated with ultraviolet or Holder pasteurization.

### (a) Ultraviolet treatment

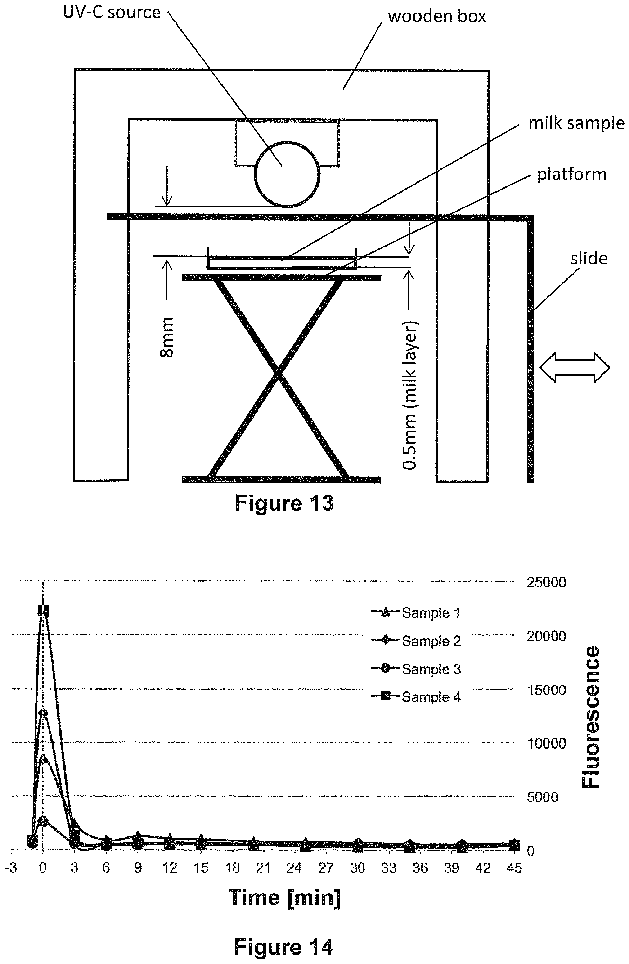

A portion of each human milk sample (150 µl) was placed in a 0.4 mm layer under a UV-C lamp (4 W at 254 nm, 40 mW/cm2 @ 1 meter, GPH287T5L, Infralight Technology, Helensburgh, NSW, Australia) with a distance of 8 mm and irradiated for 3 minutes as set up in Figure 13. Under these conditions a treatment time of 10 seconds is required to reduce cytomegalovirus in human milk (Marchant, 2011).

### (b) Holder pasteurization

Part of each human milk sample (1.6 ml) was transferred into a 2 ml polypropylene micro tube. The samples were placed into a preheated water bath (CC-1, Huber GmbH, Offenburg, Germany) and brought to 62.5°C and kept for 30 minutes, then, the samples were immediately cooled to 4°C in an ice bath and either analyzed or exposed to further treatments.

### (c) Catalase and H₂O₂ treatment

An aliquot of each untreated, UV-C irradiated and Holder pasteurized human milk sample was treated with 10 U/ml of catalase (Sigma-Aldrich Co., St Louis, MO, USA) and incubated for 15 minutes at room temperature. Another part of each untreated, UV-C irradiated and Holder pasteurized human milk sample was treated with 10 µM of H₂O₂ and incubated for 15 minutes at room temperature.

### (d) Measurement of hydrogen peroxide

The Amplex red assay (Life Technologies, Carlsbad, CA, USA) was used to detect hydrogen peroxide activity and read at 544 nm excitation and 590 nm emission and 10 flashes.

Prior to the UV-C treatment (Figure 14, Time = -1 minute), human milk had a fluorescence reading of 803±134. Immediately after UV-C irradiation (0 minute) the fluorescence reading was significantly higher with 11,519±8250. After 3 minutes of the UV-C treatment the fluorescence reading was 1,238±905 and after 6 minutes 628±187, which remained steady to 45 minutes (Figure 14).

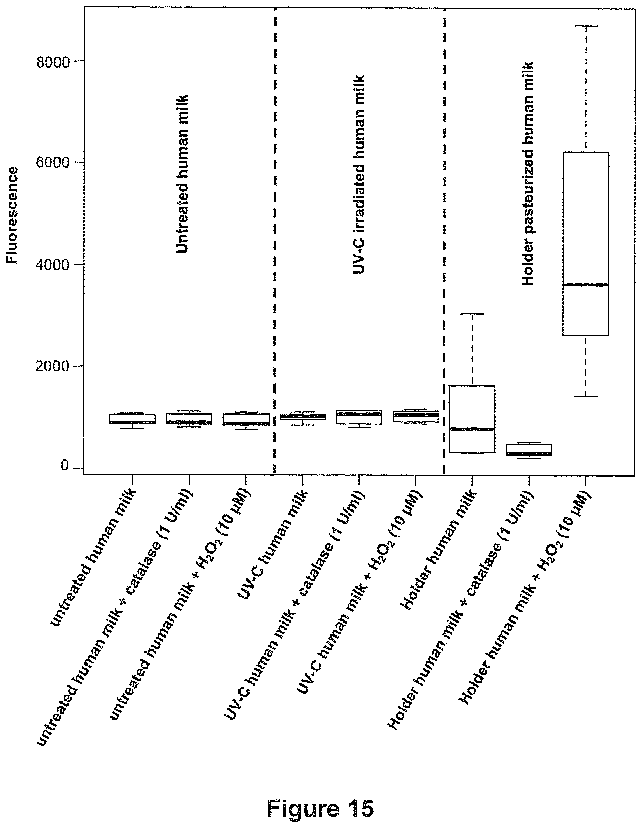

Untreated human milk (UHM) had a fluorescence reading with UHM, UHM with 10 U/ml of catalase and UHM with 10 µM of H2O2 of 937±112, 958±117 and 935±129, respectively (n=6). UV-C irradiated human milk (UVHM) had a fluorescence reading with UVHM, UVHM with 10 U/ml of catalase and UVHM with 10 µM of H₂O₂ of 1,014±112, 1,025±137 and 1,143±109, respectively (n=6). Holder pasteurized human milk (HPHM) had a fluorescence reading with HPHM, HPHM with 10 U/ml of catalase and HPHM with 10 µM of H₂O₂ of 1,155±1049, 363±125 and 4,381±2657, respectively (n=6) (Figure 15).

In conclusion, untreated and UV-C irradiated human milk has a baseline of H₂O₂ and has a regulation process, which keeps that baseline level constant. UV-C irradiation creates H₂O₂ in human milk but within 3 minutes after treatment it is reduced back to the pre treatment level. Holder pasteurized human milk lost its regulation process and the H₂O₂ level can be changed by environmental stress. This finding suggests that UV-C irradiation does not cause significant damage to the anti-oxidant components in human milk.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein.

## Claims

1. A method for inactivating or reducing an amount of a biological contaminant in a human milk product comprising exposing the human milk product to ultraviolet light (UV) having a wavelength from 250nm to 270nm, and imparting a vortical flow to the human milk product to facilitate exposure of the biological contaminant to the UV light; wherein said exposure inactivates or reduces the amount of the biological contaminant in the human milk product; and wherein an activity of a bioactive component present in the milk product is not substantially reduced, such that after inactivation of the biological contaminant by UV light exposure, the activity of the bioactive component present in the human milk product is at least 50% of the activity of the bioactive component before UV light exposure.

2. A method according to claim 1, wherein said vortical flow is imparted to the human milk product by a vortex.

3. A method according to claim 1 or 2 wherein the UV light has a wavelength of 254nm.

4. A method according to any of the preceding claims, wherein the vortical flow is imparted using a stirring means.

5. A method according to claim 4 wherein the vortical flow is imparted at a speed sufficient to expose the biological contaminant to the UV light without substantially reducing the activity of the bioactive component, such that after inactivation of the biological contaminant by UV light exposure, the activity of the bioactive component present in the human milk product is at least 50% of the activity of the bioactive component before UV light exposure.

6. A method according to any one of the preceding claims, wherein the amount of the biological contaminant is inactivated or reduced by an order of at least 1-Log₁₀ preferably 5-Log₁₀.

7. A method according to any one of the preceding claims wherein a dose of UV applied to the milk is within the range of 100 - 10000 J/I.

8. A method according to any one of the preceding claims, wherein said biological contaminant is selected from a group comprising *E. coli, Staphylococcus* spp. *Streptococcus* spp., *Bacillus* spp., *Enterococcus* spp. and *Enterobacter* spp., Cytomegalovirus, Human immunodeficiency virus or Human T-lymphotrophic virus.

9. A method according to any one of the preceding claims wherein, said bioactive component is a carbohydrate, lipid, protein, fatty acid, enzyme, antibody, growth factor, cytokine, chemokine, hormone, antimicrobial compound or metabolite.

10. A method according to claim 9, wherein said bioactive component is a protein selected from the group comprising bile salt stimulated lipase, alkaline phosphatase, lactoperoxidase, lactoferrin, lysozyme and secretory IgA, myeloperoxidase, glutathione peroxidase, catalase, superoxide dismutase, or lactoferrin, preferably bile salt stimulated lipase, alkaline phosphatase, lactoferrin, lysozyme and secretory IgA, more preferably bile salt stimulated lipase, alkaline phosphatase and lactoferrin.

11. A method according to any one of the preceding claims, wherein a bacteriostatic property of said a human milk product; or a concentration of the bioactive component or an antioxidant activity is not substantially reduced, such that after inactivation of the biological contaminant by UV light exposure, the activity of the bioactive component present in the human milk product is at least 50% of the activity of the bioactive component before UV light exposure.

12. A method according to any one of the preceding claims wherein the human milk product is human milk.

13. A human milk product prepared according to the method of any one of claims 1 to 12.

## Patentansprüche

1. Verfahren zur Inaktivierung oder Reduzierung einer Menge eines biologischen Kontaminanten in einem menschlichen Milchprodukt, beinhaltend, dass das menschliche Milchprodukt ultraviolettem Licht (UV) mit einer Wellenlänge von 250nm bis 270nm ausgesetzt wird, und dass dem menschlichen Milchprodukt ein vortikaler Fluss auferlegt wird, um die Aussetzung des biologischen Kontaminanten zum UV-Licht zu erleichtern; wobei die besagte Aussetzung die Menge des biologischen Kontaminanten im menschlichen Milchprodukt inaktiviert oder reduziert; und wobei eine Aktivität einer im Milchprodukt anwesenden bioaktiven Komponente nicht wesentlich reduziert wird, sodass nach der Inaktivierung des biologischen Kontaminanten durch UV-Licht-Aussetzung, die Aktivität der im menschlichen Milchprodukt anwesenden bioaktiven Komponente mindestens 50% der Aktivität der bioaktiven Komponente vor der UV-Licht-Aussetzung beträgt.

2. Verfahren gemäss Anspruch 1, wobei der besagte vortikale Fluss dem menschlichen Milchprodukt durch einen Wirbel auferlegt wird.

3. Verfahren gemäss Anspruch 1 oder 2, wobei das UV-Licht eine Wellenlänge von 254nm aufweist.

4. Verfahren gemäss einem der vorhergehenden Ansprüche, wobei der vortikale Fluss unter Verwendung eines Rührmittels auferlegt wird.

5. Verfahren gemäss Anspruch 4, wobei der vortikale Fluss in einer ausreichenden Geschwindigkeit auferlegt wird, um den biologischen Kontaminanten dem UV-Licht auszusetzen, ohne die Aktivität der bioaktiven Komponente wesentlich zu reduzieren, sodass nach der Inaktivierung des biologischen Kontaminanten durch UV-Licht-Aussetzung, die Aktivität der im menschlichen Milchprodukt anwesenden bioaktiven Komponente mindestens 50% der Aktivität der bioaktiven Komponente vor der UV-Licht-Aussetzung beträgt.

6. Verfahren gemäss einem der vorhergehenden Ansprüche, wobei die Menge des biologischen Kontaminanten inaktiviert oder reduziert wird um eine Grössenordnung von mindestens 1-Log₁₀, vorzugsweise 5-Log₁₀.

7. Verfahren gemäss einem der vorhergehenden Ansprüche, wobei eine Dosis des UV Lichts, welches an die Milch angelegt wird, im Bereich von 100-10000 J/I liegt.

8. Verfahren gemäss einem der vorhergehenden Ansprüche, wobei der besagte biologische Kontaminant aus einer Gruppe ausgewählt ist, aufweisend E. *coli, Staphylococcus* spp., *Streptococcus* spp., *Bacillus* spp., *Enterococcus* spp. *und Enterobacter* spp., Cytomegalovirus, Menschliches Immunschwäche-Virus (HIV) oder Menschliches T-Lymphotrophes Virus.

9. Verfahren gemäss einem der vorhergehenden Ansprüche, wobei die besagte bioaktive Komponente ein Kohlenhydrat, ein Lipid, ein Protein, eine Fettsäure, ein Enzym, ein Antikörper, ein Wachstumsfaktor, ein Zytokin, ein Chemokin, ein Hormon, eine antimikrobielle Verbindung oder ein Metabolit ist.

10. Verfahren gemäss Anspruch 9, wobei die besagte bioaktive Komponente ein Protein ist, welches ausgewählt ist aus der Gruppe aufweisend Gallensalz-stimulierte Lipase, alkalische Phosphatase, Laktoperoxidase, Laktoferrin, Lysozym und sekretorisches IgA, Myeloperoxidase, Glutathion-Peroxidase, Katalase, Superoxid-Dismutase oder Laktoferrin ist, vorzugsweise Gallensalz-stimulierte Lipase, alkalische Phosphatase, Laktoferrin, Lysozym und sekretorisches IgA, insbesondere bevorzugt Gallensalz-stimulierte Lipase, alkalische Phosphatase, und Laktoferrin.

11. Verfahren gemäss einem der vorhergehenden Ansprüche, wobei eine bakteriostatische Eigenschaft des besagten menschlichen Milchproduktes oder eine Konzentration der bioaktiven Komponente oder eine Antioxidant-Aktivität nicht wesentlich reduziert wird, sodass nach Inaktivierung des biologischen Kontaminanten durch UV-Licht-Aussetzung, die Aktivität der im menschlichen Milchprodukt anwesenden bioaktiven Komponente mindestens 50% der Aktivität der bioaktiven Komponente vor der UV-Licht-Aussetzung beträgt.

12. Verfahren gemäss einem der vorhergehenden Ansprüche, wobei das menschliche Milchprodukt menschliche Milch ist.

13. Menschliches Milchprodukt, hergestellt gemäss einem Verfahren gemäss einem der Ansprüche 1-12.

## Revendications

1. Méthode d'inactivation ou de réduction d'une quantité d'un contaminant biologique dans un produit de lait humain, comprenant l'exposition du produit de lait humain à de la lumière ultraviolette (UV) ayant une longueur d'onde allant de 250 nm à 270 nm, et la transmission d'un flux tourbillonnaire au produit de lait humain afin de faciliter l'exposition du contaminant biologique à la lumière UV ; où ladite exposition inactive ou réduit la quantité du contaminant biologique dans le produit de lait humain ; et où une activité d'un composant bioactif présent dans le produit de lait n'est pas sensiblement réduite, de sorte qu'après l'inactivation du contaminant biologique par l'exposition à la lumière UV, l'activité du composant bioactif présent dans le produit de lait humain constitue au moins 50% de l'activité du composant bioactif avant l'exposition à la lumière UV.

2. Méthode selon la revendication 1, dans laquelle ledit flux tourbillonnaire est transmis au produit de lait humain par un vortex.

3. Méthode selon la revendication 1 ou 2, dans laquelle la lumière UV présente une longueur d'onde de 254 nm.

4. Méthode selon l'une quelconque des revendications précédentes, dans laquelle le flux tourbillonnaire est transmis à l'aide d'un moyen d'agitation.

5. Méthode selon la revendication 4, dans laquelle le flux tourbillonnaire est transmis à une vitesse suffisante pour exposer le contaminant biologique à la lumière UV sans réduire sensiblement l'activité du composant bioactif, de sorte qu'après l'inactivation du contaminant biologique par l'exposition à la lumière UV, l'activité du composant bioactif présent dans le produit de lait humain constitue au moins 50% de l'activité du composant bioactif avant l'exposition à la lumière UV.

6. Méthode selon l'une quelconque des revendications précédentes, dans laquelle la quantité de contaminant biologique est inactivée ou réduite d'un ordre de grandeur d'au moins 1 Log₁₀, préférablement 5 Log₁₀.

7. Méthode selon l'une quelconque des revendications précédentes, dans laquelle une dose d'UV appliquée au lait se trouve dans la plage de 100-10 000 J/I.

8. Méthode selon l'une quelconque des revendications précédentes, dans laquelle ledit contaminant biologique est choisi dans le groupe comprenant *E. coli, Staphylococcus* spp., *Streptococcus* spp., *Bacillus* spp., *Enterococcus* spp. et *Enterobacter* spp., Cytomégalovirus, le Virus de l'Immunodéficience Humaine ou le Virus T-lymphotrope Humain.

9. Méthode selon l'une quelconque des revendications précédentes, dans laquelle ledit composant bioactif est un glucide, un lipide, une protéine, un acide gras, une enzyme, un anticorps, un facteur de croissance, une cytokine, une chimiokine, une hormone, un composé antimicrobien ou un métabolite.

10. Méthode selon la revendication 9, dans laquelle ledit composant bioactif est une protéine choisie dans le groupe comprenant la lipase stimulée par les sels biliaires, la phosphatase alcaline, la lactoperoxydase, la lactoferrine, le lysozyme et l'lgA sécrétoire, la myéloperoxydase, la glutathion peroxydase, la catalase, la superoxyde dismutase, ou la lactoferrine, préférablement la lipase stimulée par les sels biliaires, la phosphatase alcaline, la lactoferrine, le lysozyme et l'IgA sécrétoire, plus préférablement la lipase stimulée par les sels biliaires, la phosphatase alcaline et la lactoferrine.

11. Méthode selon l'une quelconque des revendications précédentes, dans laquelle une propriété bactériostatique dudit produit de lait humain ; ou une concentration en composant bioactif ou une activité antioxydante n'est pas sensiblement réduite, de sorte qu'après l'inactivation du contaminant biologique par l'exposition à la lumière UV, l'activité du composant bioactif présent dans le produit de lait humain constitue au moins 50% de l'activité du composant bioactif avant l'exposition à la lumière UV.

12. Méthode selon l'une quelconque des revendications précédentes, dans laquelle le produit de lait humain est constitué de lait humain.

13. Produit de lait humain préparé selon la méthode selon l'une quelconque des revendications 1 à 12.
